# EUROPÄISCHE PATENTSCHRIFT

(11) **EP 1 123 729 B1**
(45) Veröffentlichungstag und Bekanntmachung des Hinweises auf die Patenterteilung: **29.08.2007**
(21) Anmeldenummer: 01250035.1
(22) Anmeldetag: 01.02.2001
(51) Int. Cl.: F01N 3/08, B01D 53/94

(54) **Katalysatorsystem zur Nachbehandlung eines von einer Verbrennungskraftmaschine erzeugten Abgases**
Catalytic system for after treatment of exhaust gas of an internal combustion engine
Système catalytique de post-traitement de gaz d'échappement d'un moteur à combustion interne

(30) Priorität: 09.02.2000 DE 10005714
(43) Veröffentlichungstag der Anmeldung: 16.08.2001
(73) Patentinhaber: Volkswagen Aktiengesellschaft, 38436 Wolfsburg (DE)
(72) Erfinder: Pott, Ekkehard, 38518 Gifhorn (DE); Held, Wolfgang, 38448 Wolfsburg (DE)
(74) Vertreter: Schneider, Henry

(56) Entgegenhaltungen:
- EP-A- 1 052 382
- DE-A- 19 636 041
- DE-A- 19 921 971
- US-A- 4 125 997
- US-B1- 6 342 192

## Beschreibung

Die Erfindung betrifft ein Katalysatorsystem zur Nachbehandlung eines von einer Verbrennungskraftmaschine erzeugten Abgases mit den im Oberbegriff des Anspruchs 1 genannten Merkmalen.

Um eine Reinigung eines Abgases von Verbrennungskraftmaschinen, insbesondere von magerlauffähigen Kraftfahrzeugen vorzunehmen, ist es bekannt, Katalysatorsysteme mit NOₓ-Speicherfunktion in einem Abgaskanal der Verbrennungskraftmaschine anzuordnen. Dabei unterstützen Oxidationskatalysatoren die Oxidation von Kohlenmonoxid (CO) und unvollständig verbrannten Kohlenwasserstoffen (HC) zu Kohlendioxid und Wasser. Dagegen fördern Reduktionskatalysatoren die Umsetzung von Stickoxiden (NOₓ) zu Stickstoff. Die gleichzeitige Umwandlung der drei Schadstoffe CO, HC und NOₓ wird durch 3-Wege-Katalysatoren realisiert. Dabei ist die vollständige Umsetzung dieser Verbindungen nur dann möglich, wenn ein stöchiometrisches Verhältnis der Verbrennungsprodukte und Sauerstoff vorliegt (λ = 1).

Im Zuge einer angestrebten Reduktion eines Kraftstoffverbrauchs wird ein magerer Betriebsmodus von Verbrennungskraftmaschinen angestrebt (λ > 1), der durch einen Sauerstoffüberschuss im Abgas charakterisiert ist. Gleichzeitig sinken im Magerbetrieb die CO- und HC-Anteile im Abgas, wogegen die NOₓ-Konzentration erhöht ist. Infolgedessen kann NOₓ im Magerbetrieb nicht quantitativ konvertiert werden, sondern wird in dem NOₓ-Speicher des Katalysators als Nitrat eingelagert. Entsprechend einer absoluten Speicherkapazität des NOₓ-Absorbers muss der NOₓ-Speicherkatalysator in periodischen Abständen unter Beaufschlagung mit stöchiometrischem oder fettem Abgas (λ ≤ 1) regeneriert werden, wobei freigesetztes NOₓ durch nunmehr im Überschuss vorhandenes CO und HC umgesetzt wird.

Gegenwärtige NOₓ-Speicherkatalysatorsysteme bestehen üblicherweise aus einem motornahen, kleinvolumigen Vorkatalysator und einem stromab angeordneten großvolumigen NOₓ-Speicherkatalysator. Dabei weist der Vorkatalysator ein 0,15...0,5-Faches eines Hubraumes der Verbrennungskraftmaschine auf, während der größere NOₓ-Speicherkatalysator entsprechend einem 0,7...1,5-Fachen des Hubvolumens dimensioniert ist. Beide Katalysatoren weisen spezifische Edelmetallgehalte im Bereich von 3,2 bis 4,6 g/dm³ (90 bis 130 g/ft³) auf, wobei ein Verhältnis zwischen spezifischem Edelmetallgehalt des Vorkatalysators und dem des NOₓ-Speicherkatalysators von 0,7 bis 1,3 in gegenwärtigen Katalysatorsystemen anzutreffen ist.

Die beschriebene Auslegung derzeitiger Katalysatorsysteme ist mit verschiedenen Nachteilen verbunden. Aufgrund des kleinen Vorkatalysatorvolumens ist eine Raumgeschwindigkeit des Abgases im Vorkatalysator relativ hoch, wodurch eine kurze Verweildauer des Abgases am Katalysator und ein unzufriedenstellender Wirkungsgrad hinsichtlich der Konvertierungsreaktionen bedingt wird. Infolgedessen muss der spezifische Edelmetallgehalt des Speicherkatalysators verhältnismäßig hoch gewählt werden, um die resultierenden HC- und CO-Durchbrüche des Vorkatalysators vollständig konvertieren zu können. Ein hoher spezifischer Edelmetallgehalt führt jedoch insbesondere wegen des großen Volumens des NOₓ-Speicherkatalysators zu sehr hohen Materialkosten. Ein weiterer Nachteil bestehender Katalysatorsysteme ergibt sich aus dem Umstand, dass die HC-Oxidation an dem Speicherkatalysator eine Konkurrenzreaktion zur NOₓ-Oxidation und Einlagerung in den Speicher darstellt. Somit bedingt der mangelnde Wirkungsgrad des Vorkatalysators auch eine Minderung der NOₓ-Speicheraktivität des Speicherkatalysators. Gerade im Hinblick auf immer strenger werdende gesetzlich vorgegebene Schadstoffgrenzwerte ist eine weitere Reduzierung der NOₓ-Emission unumgänglich.

DE 196 36 041 A1 beschreibt eine Abgasanlage für Dieselmotoren, umfassend einen als Vorkatalysator geschalteten Oxidationskatalysator und einen diesem nachgeschalteten NOₓ-Speicherkatalysator. Der Vorkatalysator weist eine Platinbeladung von mindestens 60 g/ft³, insbesondere von 70 g/ft³ auf. Demgegenüber besitzt der NOₓ-Speicherkatalysator eine Platinbeladung von maximal 50 g/ft³, insbesondere von 46 g/ft³.

Der vorliegenden Erfindung liegt daher die Aufgabe zugrunde, ein NOₓ-Speicherkatalysatorsystem auf 3-wege-katalytischer Basis vorzuschlagen, durch das die Herstellungskosten gesenkt und gleichzeitig die NOₓ-Emission reduziert werden kann.

Eine nahe liegende Lösung dieser Aufgabe, die in einer Vergrößerung des Vorkatalysators besteht, erscheint aus zwei Gründen nicht sinnvoll. Sie scheitert zum einen häufig an Restriktionen des Bauraums in Motorräumen. Ferner ist eine Vergrößerung des Vorkatalysators auch mit einer Zunahme von einer O₂-Speicherfähigkeit des Vorkatalysators verbunden, so dass die NOₓ-Regenerationszeiten des Speicherkatalysators verlängert werden. Dies wirkt sich nachteilig auf den Kraftstoffverbrauch aus.

Die vorliegende Erfindung verfolgt daher eine andere Strategie und löst die obige Aufgabe mit den im Anspruch 1 genannten Merkmalen. In dem erfindungsgemäßen Katalysatorsystem ist vorgesehen, dass ein spezifischer Edelmetallgehalt des Vorkatalysators 3,7 bis 15 g/dm³ (105 bis 420 g/ft³) beträgt und ein Verhältnis des spezifischen Edelmetallgehaltes des Vorkatalysators zu dem des NOₓ-Speicherkatalysators 1,5 bis 5 beträgt. Dabei ist der spezifische Edelmetallgehalt als eine auf ein Katalysatorvolumen bezogene Masse des Edelmetalls definiert. Die starke Erhöhung des Edelmetallgehaltes des Vorkatalysators gegenüber derzeitigen Systemen bewirkt eine deutliche Erhöhung des Konvertierungswirkungsgrades im Vorkatalysator, so dass der spezifische Edelmetallgehalt des nachgeschalteten NOₓ-Speicherkatalysators drastisch abgesenkt werden kann. Ein Vorteil dieser Systemauslegung ist in deutlich niedrigeren Kosten zu sehen, da der höhere Edelmetallgehalt im kleineren Vorkatalysator durch den niedrigeren Edelmetallgehalt im größeren NOₓ-Speicherkatalysator überkompensiert wird. Gleichzeitig führt die Abnahme der im NOₓ-Speicherkatalysator stattfindenden Schadstoffkonvertierungsreaktionen zu einer erhöhten NOₓ-Speicheraktivität und folglich zu einem verminderten NOₓ-Ausstoß.

Entsprechend einer vorteilhaften Ausgestaltung der Erfindung beträgt ein Volumen des Vorkatalysators ein 0,15...0,5-Faches, insbesondere ein 0,15...0,3-Faches des Hubvolumens der Verbrennungskraftmaschine. Die vorteilhafte Edelmetallauslegung der vorliegenden Erfindung lässt damit sogar noch eine Reduzierung des maximalen Volumens des Vorkatalysators gegenüber üblichen Katalysatorsystemen zu. Es ist ferner vorgesehen, dass ein Volumen des NOₓ-Speicherkatalysators ein 0,7...1,5-Faches des Hubvolumens der Verbrennungskraftmaschine beträgt. Dies entspricht derzeitigen Volumina von NOₓ-Speicherkatalysatoren.

Gemäß einer bevorzugten Ausgestaltung beträgt der spezifische Edelmetallgehalt des Vorkatalysators 5,3 bis 14,1 g/dm³ (150 bis 400 g/ft³), insbesondere 5,7 bis 8,8 g/dm³ (160 bis 250 g/ft³). Derartig hohe Edelmetallgehalte lassen sich mit den üblichen Herstellungsverfahren ohne weiteres realisieren. Der spezifische Edelmetallgehalt des NOₓ-Speicherkatalysators kann vorteilhaft von 1,1 bis 3,5 g/dm³ (30 bis 100 g/ft³), insbesondere von 1,4 bis 3,2 g/dm³ (40 bis 90 g/ft³), gewählt werden. Diese Auslegung des Katalysatorsystems eignet sich insbesondere für die Erfüllung der strengen europäischen Abgasnorm.

Eine andere vorteilhafte Ausgestaltung sieht einen spezifischen Edelmetallgehalt des Vorkatalysators von 4,2 bis 12,4 g/dm³ (120 bis 350 g/ft³), insbesondere 4,6 bis 8,8 g/dm³ (130 bis 250 g/ft³), vor. In diesem Fall beträgt der spezifische Edelmetallgehalt des NOₓ-Speicherkatalysators vorteilhafterweise 1,1 bis 3,2 g/dm³ (30 bis 90 g/ft³), insbesondere 1,4 bis 2,5 g/dm³ (40 bis 70 g/ft³). Durch diese gegenüber der vorgenannten Ausführungsform etwas niedrigeren Edelmetallgehalte lassen sich die Materialkosten noch weiter absenken.

Diese Auslegung ist für die Einhaltung weniger strenger gesetzlicher Schadstoffnormen, beispielsweise in Abstimmung mit japanischen Vorschriften, geeignet.

Als katalytisch wirksame Edelmetalle kommen Platin, Palladium und Rhodium in Frage oder eine beliebige Kombination von diesen. Die folgende Tabelle gibt relative Massenanteile der genannten Edelmetalle jeweils in einem insgesamt möglichen und in einem optimalen Bereich wieder.

| | **Vorkatalysator** | | **NOₓ-Speicherkatalysator** | |
|---|---|---|---|---|
| | möglich | optimal | möglich | optimal |
| Pt | 0-100 % | 20-70 % | 10-97 % | 20-80 % |
| Pd | 0-100 % | 20-70 % | 0-100 % | 20-50 % |
| Rh | 0-40 % | 5-20 % | 3-100 % | 5-30 % |

Weitere vorteilhafte Ausgestaltungen der Erfindung sind Gegenstand der übrigen Unteransprüche.

Die Erfindung wird nachfolgend in einem Ausführungsbeispiel anhand der zugehörigen Zeichnung näher erläutert.

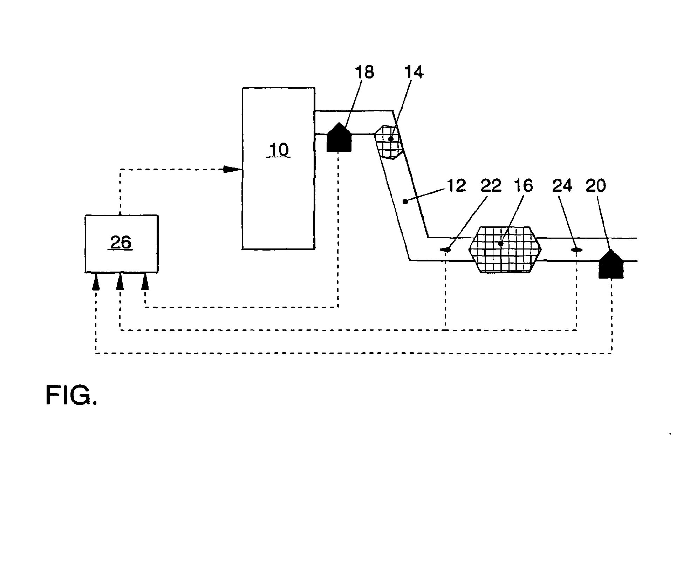

Die einzige Figur zeigt eine Verbrennungskraftmaschine 10 und einen dieser zugeordneten Abgaskanal 12. Der Abgaskanal 12 beherbergt an einer motornahen Position einen kleinvolumigen Vorkatalysator 14 und in einer nachgeschalteten, motorfernen Position einen großvolumigen NOₓ-Speicherkatalysator 16. Dieser kann beispielsweise eine Unterbodenlage eines Kraftfahrzeugs einnehmen. Das Volumen des Vorkatalysators 14 ist entsprechend einem 0,15...0,5-Fachen des Hubvolumens der Verbrennungskraftmaschine 10 dimensioniert, wogegen der NOₓ-Speicherkatalysator 16 ein 0,7...1,5-Faches des Hubvolumens einnimmt. Beide Katalysatoren 14, 16 sind als 3-Wege-Katalysatoren ausgelegt, so dass sie sowohl die Oxidation von CO und HC als auch die Reduktion von NOₓ fördern. Die Katalysatoren 14, 16 umfassen eine hier nicht dargestellte monolithische Trägersubstanz mit einer katalytisch aktiven Edelmetallbeschichtung. Hier kommen die Edelmetalle Platin, Palladium und Rhodium zum Einsatz. Erfindungsgemäß ist ein spezifischer Edelmetallgehalt des Vorkatalysators so gewählt, dass er 1,5...5-mal so groß ist wie der Edelmetallgehalt des NOₓ-Speicherkatalysators. Im Einzelnen liegt der spezifische Edelmetallgehalt des Vorkatalysators 14 bevorzugterweise in einem Bereich von 5,7 bis 8,8 g/dm³ und der des NOₓ-Speicherkatalysators 16 bei 1,4 bis 3,2 g/dm³. Innerhalb der angegebenen Bereiche sind die Edelmetallgehalte der Katalysatoren 14, 16 so auszulegen, dass das Edelmetallverhältnis in dem besagten Bereich von 1,5 bis 5 liegt.

An verschiedenen Positionen des Abgaskanals 12 sind ferner verschiedene Messinstrumente zur Erfassung ausgewählter Eigenschaften des Abgases angeordnet. So dienen die Gassonden 18 und 20 der Messung einer gasförmigen Komponente des Abgases und die Temperatursensoren 22, 24 der Ermittlung einer Abgastemperatur. Jedes der Messinstrumente 18, 20, 22, 24 stellt ein Signal an ein Motorsteuergerät 26 bereit, welches in Abhängigkeit der erfassten Größen Betriebsparameter der Verbrennungskraftmaschine 10 steuert.

Ein von der Verbrennungskraftmaschine 10 kommendes Abgas trifft zunächst auf den als 3-Wege-Katalysator ausgestalteten Vorkatalysator 14. Aufgrund der kleinen Dimensionierung des Vorkatalysators 14 ist die Verweildauer des Abgases in diesem relativ kurz. Dessenungeachtet ermöglicht der hohe spezifische Edelmetallgehalt des Vorkatalysators 14, dass Kohlenmonoxid und unverbrannte Kohlenwasserstoffe während eines mageren Betriebsmodus der Verbrennungskraftmaschine 10 nahezu vollständig in Kohlendioxid und Wasser konvertiert werden. Das den Vorkatalysator 14 verlassende Abgas ist somit praktisch frei von CO und HC, enthält jedoch noch relativ große Mengen an Stickoxiden NOₓ. Diese werden in den NOₓ-Absorber des Speicherkatalysators 16 eingelagert. Aufgrund des hohen Wirkungsgrades des Vorkatalysators 14 muss die NOₓ-Oxidation und -Einlagerung am NOₓ-Speicherkatalysator 16 praktisch nicht mit der Konvertierungsreaktion von Kohlenwasserstoffen konkurrieren. Die NOₓ-Speicheraktivität des NOₓ-Speicherkatalysators 16 ist demnach gegenwärtigen Speicherkatalysatoren überlegen. Gleichzeitig kann der spezifische Edelmetallgehalt des NOₓ-Speicherkatalysators 16 soweit reduziert werden, dass seine katalytische Aktivität ausreicht, um während einer NOₓ-Regeneration desorbiertes NOₓ zu konvertieren. Aufgrund des großen Volumens des NOₓ-Speicherkatalysators 16 sorgt eine Reduzierung seines spezifischen Edelmetallgehaltes für eine Überkompensierung des erhöhten Edelmetallgehaltes am Vorkatalysator 14. Insgesamt sind die Herstellungskosten des erfindungsgemäßen Katalysatorsystems folglich deutlich niedriger als für gegenwärtige Systeme. Gleichzeitig führt die Verbesserung der Katalysatoraktivität des Vorkatalysators 14 und der NOₓ-Speicheraktivität des NOₓ-Speicherkatalysators 16 zu niedrigeren Schadstoffemissionen, insbesondere von Stickoxiden.

## Patentansprüche

1. Katalysatorsystem zur Nachbehandlung eines von einer Verbrennungskraftmaschine (10) erzeugten Abgases mit einem Vorkatalysator (14) und einem in Strömungsrichtung nachgeschalteten NOₓ-Speicherkatalysator (16), wobei Vorkatalysator (14) und NOₓ-Speicherkatalysator (16) jeweils eine 3-wegekatalytische Beschichtung mit mindestens einem Edelmetall aufweisen, **dadurch gekennzeichnet, dass** ein spezifischer Edelmetallgehalt des Vorkatalysators (14) 3,7 bis 15 g/dm³ (105 bis 420 g/ft³) beträgt und ein Verhältnis des spezifischen Edelmetallgehaltes des Vorkatalysators (14) zu dem des NOₓ-Speicherkatalysators (16) 1,5 bis 5 beträgt, wobei der spezifische Edelmetallgehalt eine auf ein Katalysatorvolumen bezogene Masse des Edelmetalles ist.

2. Katalysatorsystem nach Anspruch 1, **dadurch gekennzeichnet, dass** ein Volumen des Vorkatalysators (14) ein 0,15...0,5-Faches, insbesondere ein 0,15...0,3-Faches eines Hubvolumens der Verbrennungskraftmaschine (10) beträgt.

3. Katalysatorsystem nach einem der Ansprüche 1 oder 2, **dadurch gekennzeichnet, dass** ein Volumen des NOₓ-Speicherkatalysators (16) ein 0,7...1,5-Faches des Hubvolumens der Verbrennungskraftmaschine (10) beträgt.

4. Katalysatorsystem nach einem der Ansprüche 1 bis 3, **dadurch gekennzeichnet, dass** der spezifische Edelmetallgehalt des Vorkatalysators (14) 5,3 bis 14,1 g/dm³ (150 bis 400 g/ft³), insbesondere 5,7 bis 8,8 g/dm³ (160 bis 250 g/ft³), beträgt.

5. Katalysatorsystem nach Anspruch 4, **dadurch gekennzeichnet, dass** der spezifische Edelmetallgehalt des NOₓ-Speicherkatalysators (16) 1,1 bis 3,5 g/dm³ (30 bis 100 g/ft³), insbesondere 1,4 bis 3,2 g/dm³ (40 bis 90 g/ft³), beträgt.

6. Katalysatorsystem nach einem der Ansprüche 1 bis 3, **dadurch gekennzeichnet, dass** der spezifische Edelmetallgehalt des Vorkatalysators (14) 4,2 bis 12,4 g/dm³ (120 bis 350 g/ft³), insbesondere 4,6 bis 8,8 g/dm³ (130 bis 250 g/ft³), beträgt.

7. Katalysatorsystem nach Anspruch 6, **dadurch gekennzeichnet, dass** der spezifische Edelmetallgehalt des NOₓ-Speicherkatalysators (16) 1,1 bis 3,2 g/dm³ (30 bis 90 g/ft³), insbesondere 1,4 bis 2,5 g/dm³ (40 bis 70 g/ft³), beträgt.

8. Katalysatorsystem nach einem der vorhergehenden Ansprüche, **dadurch gekennzeichnet, dass** das Edelmetall Platin, Palladium oder Rhodium ist oder eine Kombination von diesen.

9. Katalysatorsystem nach einem der vorhergehenden Ansprüche, **dadurch gekennzeichnet, dass** ein relativer Platinanteil des Vorkatalysators (14) 0 bis 100 %, insbesondere 20 bis 70 %, und des NOₓ-Speicherkatalysators (16) 10 bis 97 %, insbesondere 20 bis 80 %, beträgt, wobei der relative Platinanteil ein Verhältnis einer Platinmasse zu einer Edelmetallgesamtmasse angibt.

10. Katalysatorsystem nach einem der vorhergehenden Ansprüche, **dadurch gekennzeichnet, dass** ein relativer Palladiumanteil des Vorkatalysators (14) 0 bis 100 %, insbesondere 20 bis 70 %, und des NOₓ-Speicherkatalysators (16) 0 bis 100 %, insbesondere 20 bis 50 %, beträgt, wobei der relative Palladiumanteil ein Verhältnis einer Palladiummasse zu einer Edelmetallgesamtmasse angibt.

11. Katalysatorsystem nach einem der vorhergehenden Ansprüche, **dadurch gekennzeichnet, dass** ein relativer Rhodiumanteil des Vorkatalysators (14) 0 bis 40 %, insbesondere 5 bis 20 %, und des NOₓ-Speicherkatalysators (16) 3 bis 100 %, insbesondere 5 bis 30 %, beträgt, wobei der relative Rhodiumanteil ein Verhältnis einer Rhodiummasse zu einer Edelmetallgesamtmasse angibt.

## Claims

1. Catalytic system for the aftertreatment of an exhaust gas generated by an internal combustion engine (10), the system comprising a primary catalytic converter (14) and an NOₓ storage catalytic converter (16) connected downstream in the direction of flow, wherein primary catalytic converter (14) and NOₓ storage catalytic converter (16) each have a 3-way catalytic coating comprising at least one precious metal, **characterized in that** the specific precious metal content of the primary catalytic converter (14) is 3.7 to 15 g/dm³ (105 to 420 g/ft³) and the ratio of the specific precious metal content of the primary catalytic converter (14) to that of the NOₓ storage catalytic converter (16) is from 1.5 to 5, wherein the specific precious metal content is the mass of the precious metal referenced to the catalytic converter volume.

2. Catalytic system according to Claim 1, **characterized in that** the volume of the primary catalytic converter (14) amounts to the 0.15-fold up to the 0.5-fold, in particular to the 0.15-fold up to the 0.3-fold, of the displacement of the internal combustion engine (10).

3. Catalytic system according to either of Claims 1 and 2, **characterized in that** the volume of the NOₓ storage catalytic converter (16) amounts to the 0.7-fold up to the 1.5-fold of the displacement of the internal combustion engine (10).

4. Catalytic system according to one of Claims 1 to 3, **characterized in that** the specific precious metal content of the primary catalytic converter (14) is 5.3 to 14.1 g/dm³ (150 to 400 g/ft³), in particular 5.7 to 8.8 g/dm³ (160 to 250 g/ft³).

5. Catalytic system according to Claim 4, **characterized in that** the specific precious metal content of the NOₓ storage catalytic converter (16) is 1.1 to 3.5 g/dm³ (30 to 100 g/ft³), in particular 1.4 to 3.2 g/dm³ (40 to 90 g/ft³).

6. Catalytic system according to one of Claims 1 to 3, **characterized in that** the specific precious metal content of the primary catalytic converter (14) is 4.2 to 12.4 g/dm³ (120 to 350 g/ft³), in particular 4.6 to 8.8 g/dm³ (130 to 250 g/ft³).

7. Catalytic system according to Claim 6, **characterized in that** the specific precious metal content of the NOₓ storage catalytic converter (16) is 1.1 to 3.2 g/dm³ (30 to 90 g/ft³), in particular 1.4 to 2.5 g/dm³ (40 to 70 g/ft³) .

8. Catalytic system according to one of the preceding claims, **characterized in that** the precious metal is platinum, palladium or rhodium or a combination thereof.

9. Catalytic system according to one of the preceding claims, **characterized in that** the relative proportion of platinum in the primary catalytic converter (14) is 0 to 100%, in particular 20 to 70%, and in the NOₓ storage catalytic converter (16) is 10 to 97%, in particular 20 to 80%, wherein the relative proportion of platinum denotes the ratio of the mass of platinum to the total mass of precious metal.

10. Catalytic system according to one of the preceding claims, **characterized in that** the relative proportion of palladium in the primary catalytic converter (14) is 0 to 100%, in particular 20 to 70%, and in the NOₓ storage catalytic converter (16) is 0 to 100%, in particular 20 to 50%, wherein the relative proportion of palladium denotes the ratio of the mass of palladium to the total mass of precious metal.

11. Catalytic system according to one of the preceding claims, **characterized in that** the relative proportion of rhodium in the primary catalytic converter (14) is 0 to 40%, in particular 5 to 20%, and in the NOₓ storage catalytic converter (16) is 3 to 100%, in particular 5 to 30%, wherein the relative proportion of rhodium denotes the ratio of the mass of rhodium to the total mass of precious metal.

## Revendications

1. Système catalytique pour le post-traitement d'un gaz d'échappement produit par un moteur à combustion interne (10), comprenant un précatalyseur (14) et un catalyseur à accumulation de NOx (16) monté derrière lui dans le sens de l'écoulement, le précatalyseur (14) et le catalyseur à accumulation de NOx (16) présentant chacun un revêtement catalytique à 3 voies avec au moins un métal noble, **caractérisé en ce que** la teneur spécifique en métal noble du précatalyseur (14) vaut 3,7 à 15 g/dm³ (105 à 420 g/pied³) et le rapport de la teneur spécifique en métal noble du précatalyseur (14) à celle du catalyseur à accumulation de NOx (16) vaut 1,5 à 5, la teneur spécifique en métal noble étant une masse de métal noble rapportée à un volume de catalyseur.

2. Système catalytique selon la revendication 1, **caractérisé en ce que** le volume du précatalyseur (14) vaut 0,15 fois à 0,5 fois, notamment 0,15 fois à 0,3 fois la cylindrée du moteur à combustion interne (10).

3. Système catalytique selon l'une quelconque des revendications 1 ou 2, **caractérisé en ce que** le volume du catalyseur à accumulation de NOx (16) vaut 0,7 fois à 1,5 fois la cylindrée du moteur à combustion interne (10).

4. Système catalytique selon l'une quelconque des revendications 1 à 3, **caractérisé en ce que** la teneur spécifique en métal noble du précatalyseur (14) vaut 5,3 à 14,1 g/dm³ (150 à 400 g/pied³), notamment 5,7 à 8,8 g/dm³ (160 à 250 g/pied³).

5. Système catalytique selon la revendication 4, **caractérisé en ce que** la teneur spécifique en métal noble du catalyseur à accumulation de NOx (16) vaut 1,1 à 3,5 g/dm³ (30 à 100 g/pied³), notamment 1,4 à 3,2 g/dm³ (40 à 90 g/pied³).

6. Système catalytique selon l'une quelconque des revendications 1 à 3, **caractérisé en ce que** la teneur spécifique en métal noble du précatalyseur (14) vaut 4,2 à 12,4 g/dm³ (120 à 350 g/pied³), notamment 4,6 à 8,8 g/dm³ (130 à 250 g/pied³).

7. Système catalytique selon la revendication 6, **caractérisé en ce que** la teneur spécifique en métal noble du catalyseur à accumulation de NOx (16) vaut 1,1 à 3,2 g/dm³ (30 à 90 g/pied³), notamment 1,4 à 2,5 g/dm³ (40 à 70 g/pied³).

8. Système catalytique selon l'une quelconque des revendications précédentes, **caractérisé en ce que** le métal noble est du platine, du palladium ou du rhodium, ou une combinaison de ceux-ci.

9. Système catalytique selon l'une quelconque des revendications précédentes, **caractérisé en ce qu'**une proportion relative de platine du précatalyseur (14) vaut 0 à 100%, notamment 20 à 70%, et du catalyseur à accumulation de NOx (16) 10 à 97%, notamment 20 à 80%, la proportion relative de platine indiquant un rapport d'une masse de platine à une masse totale de métal noble.

10. Système catalytique selon l'une quelconque des revendications précédentes, **caractérisé en ce qu'**une proportion relative de palladium du précatalyseur (14) vaut 0 à 100%, notamment 20 à 70%, et du catalyseur à accumulation de NOx (16) 0 à 100%, notamment 20 à 50%, la proportion relative de palladium indiquant un rapport d'une masse de palladium à une masse totale de métal noble.

11. Système catalytique selon l'une quelconque des revendications précédentes, **caractérisé en ce qu'**une proportion relative de rhodium du précatalyseur (14) vaut 0 à 40%, notamment 5 à 20%, et du catalyseur à accumulation de NOx (16) 3 à 100%, notamment 5 à 30%, la proportion relative de rhodium indiquant un rapport d'une masse de rhodium à une masse totale de métal noble.
